# EUROPEAN PATENT SPECIFICATION

(11) **EP 3 491 869 B1**
(45) Date of publication and mention of the grant of the patent: **03.12.2025**
(21) Application number: 17749276.6
(22) Date of filing: 26.07.2017
(51) Int. Cl.: H04L 1/1829, H04L 1/1867, H04W 72/23, H04L 1/18, H04W 72/0453

(54) **TECHNIQUES FOR ADAPTIVE TRANSMISSIONS DURING URLLC**
VERFAHREN FÜR ADAPTIVE ÜBERTRAGUNGEN BEI URLLC
TECHNIQUES DESTINÉES AUX TRANSMISSIONS ADAPTATIVES PENDANT DES URLLC

(30) Priority: 28.07.2016 US 201662367988 P; 10.03.2017 US 201715456163
(43) Date of publication of application: 05.06.2019
(73) Proprietor: Qualcomm Incorporated, San Diego, CA 92121-1714 (US)
(72) Inventor: XU, Hao, San Diego, California 92121-1714 (US); BHUSHAN, Naga, San Diego, California 92121-1714 (US); GAAL, Peter, San Diego, California 92121-1714 (US); JIANG, Jing, San Diego, California 92121-1714 (US); ZENG, Wei, San Diego, California 92121-1714 (US); PATEL, Shimman Arvind, San Diego, California 92121-1714 (US); JI, Tingfang, San Diego, California 92121-1714 (US); SUN, Haitong, San Diego, California 92121-1714 (US)
(74) Representative: Bardehle Pagenberg Partnerschaft mbB Patentanwälte Rechtsanwälte
(86) International application number: PCT/US2017/043858
(87) International publication number: WO 2018/022697

(56) References cited:
- US-A1- 2010 128 687
- US-A1- 2016 119 105

## Description

### BACKGROUND

Aspects of this disclosure relate generally to telecommunications, and more particularly to techniques for adapting uplink transmissions for Ultra-Reliable Low-Latency Communications (URLLC) during wireless communications.

Wireless communication systems are widely deployed to provide various telecommunication services such as telephony, video, data, messaging, and broadcasts. Typical wireless communication systems may employ multiple-access technologies capable of supporting communication with multiple users by sharing available system resources (e.g., bandwidth, transmit power). Examples of such multiple-access technologies include code division multiple access (CDMA) systems, time division multiple access (TDMA) systems, frequency division multiple access (FDMA) systems, orthogonal frequency division multiple access (OFDMA) systems, single-carrier frequency division multiple access (SC-FDMA) systems, and time division synchronous code division multiple access (TD-SCDMA) systems.

These multiple access technologies have been adopted in various telecommunication standards to provide a common protocol that enables different wireless devices to communicate on a municipal, national, regional, and even global level. An example of an emerging telecommunication standard is Long Term Evolution (LTE). In particular, 5G communications technology for example, 5G communications technology is envisaged to expand and support diverse usage scenarios and applications with respect to current mobile network generations. In an aspect, 5G communications technology includes enhanced mobile broadband addressing human-centric use cases for access to multimedia content, services and data; ultra-reliable-low latency communications (URLLC) with strict requirements, especially in terms of latency and reliability; and massive machine type communications for a very large number of connected devices and typically transmitting a relatively low volume of non-delay-sensitive information. However, as the demand for mobile broadband access continues to increase, there exists a need for further improvements in 5G communications technology and beyond. Preferably, these improvements should be applicable to other multi-access technologies and the telecommunication standards that employ these technologies.

Methods are needed to provide efficient and improved process for adapting uplink transmissions during wireless communications. In certain instances, as the next generation of wireless communications come into existence, specific latency and reliability requirements are needed to be met in order to ensure adequate levels of wireless communications. Specifically, high reliability delivery and overcoming fading and error in open loop power controls are needed in order to satisfy the specific latency and reliability requirements. Thus, improvements in adapting uplink transmissions during wireless communications are desired.

Document US 2010/128687 A1 discloses a system and method for increasing the capacity of VoIP transmissions. A preferred embodiment thereof comprises fixing original transmissions into a frequency band and changing the retransmissions into separate frequency bands. Alternatively, the original transmissions may be changed into separate bands while the retransmissions may be fixed into a single frequency band. Additionally, an early termination procedure may be utilized, and a combination of multi-input multi-output scheduling may be performed to further increase the capacity of the system. Another embodiment thereof comprises reducing the overhead of a feedback signal for semi-persistent scheduling.

US 2016/119105 A1 describes methods, systems, and devices for fountain hybrid automatic repeat request (HARM) for reliable low latency communication. A wire-less device may transmit a data block based on a low latency operational mode. The device may then transmit a number of redundancy versions of the data block prior to determining whether an acknowledgement (ACK) has been received. In some examples the ACK may be an augmented ACK, which may be based on the number of redundancy versions received prior to successfully decoding the data block, and which may include an addi-tional resource request. In some examples, the device may select an up-dated modulation and coding scheme (MCS) based on the augmented ACK. In some examples, the device may increase a number of frequency resources (e.g., component carriers) used for transmission based on the augmented ACK.

There still exists a need for improved and more efficient uplink transmissions during wireless communications.

### SUMMARY

The present invention provides a solution according to the subject-matter of the independent claims. Optional variants are defined in the dependent claims.

The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented later.

Various aspects and features of the disclosure are described in further detail below with reference to various examples thereof as shown in the accompanying drawings. While the present disclosure is described below with reference to various examples, it should be understood that the present disclosure is not limited thereto. Those of ordinary skill in the art having access to the teachings herein will recognize additional implementations, modifications, and examples, as well as other fields of use, which are within the scope of the present disclosure as described herein, and with respect to which the present disclosure may be of significant utility.

### BRIEF DESCRIPTION OF THE DRAWINGS

The features, nature, and advantages of the present disclosure will become more apparent from the detailed description set forth below when taken in conjunction with the drawings in which like reference characters identify correspondingly throughout, where dashed lines may indicate optional components or actions, and wherein:
FIG. 1 is a schematic diagram of a communication network including an aspect of an uplink adaptation component during wireless communications in accordance with various aspects of the present disclosure.
FIG. 2 is flow diagram illustrating an example method of adapting uplink transmissions for URLLC during wireless communications in accordance with various aspects of the present disclosure.
FIG. 3 is a diagram of an example transmission scheme for initial transmissions and retransmissions on an uplink channel for adapting uplink transmission for URLLC during wireless communications in accordance with various aspects of the present disclosure.
FIG. 4 is a diagram of an example of a transmission scheme for initial transmissions and retransmissions using a fixed-length TTI on an uplink channel to adapt uplink transmission for URLLC during wireless communications in accordance with various aspects of the present disclosure.
FIG. 5 is a diagram of an example of a transmission scheme for initial transmissions and grants to adapt uplink transmission for URLLC during wireless communications in accordance with various aspects of the present disclosure.
FIG. 6 is a diagram of a transmission scheme for initial transmissions and grants to adapt uplink transmission for URLLC during wireless communications in accordance with various aspects of the present disclosure.
FIG. 7 is a diagram of an example of a hybrid transmission scheme for initial transmissions and retransmissions to adapt uplink transmission for URLLC during wireless communications in accordance with various aspects of the present disclosure.
FIG. 8 is a data flow diagram illustrating the data flow between different means/components in an exemplary apparatus including a uplink adaptation component to adapt uplink transmission for URLLC during wireless communications in accordance with various aspects of the present disclosure.
FIG. 9 is a diagram illustrating an example of a hardware implementation for an apparatus employing a processing system including a uplink adaptation component for adapting uplink transmission for URLLC during wireless communications in accordance with various aspects of the present disclosure.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known components are shown in block diagram form in order to avoid obscuring such concepts. In an aspect, the term "component" as used herein may be one of the parts that make up a system, may be hardware or software, and may be divided into other components.

The present aspects generally relate to adapting uplink transmissions for URLLC during wireless communications. With regard to URLLC, the user plane latency is defined as successful delivery of application layer packet from layer 2/3 service data unit (SDU) ingress point to layer 2/3 SDU egress point through radio interface. For URLLC, the target for user plane latency is 0.5 ms for uplink communications and 0.5 ms for downlink communications. For eMBB that target for user plane latency is 0.5 ms for both uplink and downlink communications. For mMTC, the occurrence of infrequent small packets may only be no worse than 10 s on uplink communications for 20 byte application packets (with uncompressed IP headers it is 105 PHY) at 164 dB MCL.

Reliability is defined as the successful probability of transmitting a number of bytes within 1 ms, which is the time to deliver a small packet from protocol layer 2/3 SDU ingress point to egress point, at a certain channel quality. Specifically, for URLLC, the requirement is 1-10⁻⁵ within 1 ms for the number of bytes (e.g. 20 bytes) with a user plane latency of 1ms. The user plane latency me be 3-10 ms for direct communications via sidelink and communication ranges of, for example, a few meters. Moreover, the user plane latency may be 2 ms when the packet is relayed via a base station.

A need exists for a communication design that fulfills the latency and reliability requirements for URLLC. For example, in order to satisfy a low latency design, the UE needs to be self-scheduling and be configured for contention based SR/PUSCH. Further, for reduced symbol/TTI duration, symbol duration may be configured at 32 us and the TTI may be one or two symbols in length. In order to reduce downlink and uplink turnaround time, one symbol of in-between time may be set. Moreover, pre-emptive vacancy from regular users may be used to avoid interference whenever UL URLLC data is detected. Dynamic termination of eMBB data traffic may occur in shared frequency regions. For demodulation, front loaded control and reserve signaling may be configured.

In an example, in order to satisfy a high reliability design, multiple transmissions with adaptive retransmission may be used to ensure high reliable delivery. Further, leveraged feedback may be used for channel adaptation so as to minimize fade and interference margins. Moreover, feedback from eNB provides adjustments for the second transmission as well as interference avoidance. Limited retransmissions may be used, such as two HARQ retransmissions within 1 ms. For reliability split, each transmission of 10⁻³ is delivered combined with 10⁻⁶. In another example, progressive transmissions with early terminations may be used, such as, beginning with high transmit power to overcome fading and error in open loop power control. This example may be used when a user is in a relatively poor channel condition. In a further example, a combination of the two previous examples may be used (e.g., a hybrid HARQ with circuit switched schemes).

Accordingly, in some aspects, the present methods and apparatuses may provide an efficient solution, as compared to current solutions, by adapting uplink transmission for URLLC during wireless communications. In other words, in the present invention, a UE that is operating in an URLLC mode adjusts how uplink transmissions occur in order to fulfill the latency and reliability requirements for URLLC. As such, the present aspects provide one or more mechanisms for transmitting, by a UE operating in a URLLC mode, a first transmission to a network entity in a first frequency region, the first frequency region corresponding to a reserved FDM region of an uplink channel. Moreover, the present aspects also provide one or more mechanisms for receiving an adjustable grant from the network entity in response to transmitting the first transmission, the grant indicating at least a second frequency region for uplink transmissions different from the first frequency region. Additionally, the present aspects also provide one or more mechanisms for adapting the first frequency region to the second frequency region for transmitting one or both of a retransmission or a subsequent transmission based on the grant.

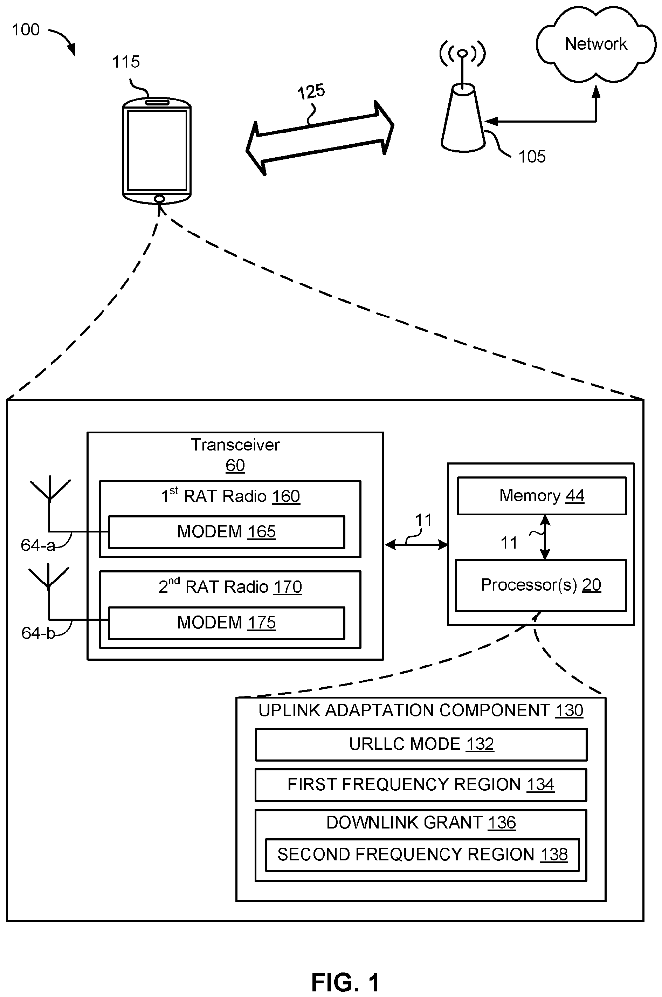

Referring to **FIG. 1****,** in an aspect, a wireless communication system 100 includes at least one user equipment (UE) 115 in communication coverage of at least network entities 105. The UE 115 may communicate with network via network entity 105. In an example, UE 115 may transmit and/or receive wireless communication to and/or from network entity 105 via one or more communication channels 125, which may include an uplink communication channel (or simply uplink channel) and a downlink communication channel (or simply downlink channel), such as but not limited to an uplink data channel and/or downlink data channel. Such wireless communications may include, but are not limited to, data, audio and/or video information.

In accordance with the present disclosure, UE 115 may include a memory 44, one or more processors 20 and a transceiver 60. The memory, one or more processors 20 and the transceiver 60 may communicate internally via a bus 11. In some examples, the memory 44 and the one or more processors 20 may be part of the same hardware component (e.g., may be part of a same board, module, or integrated circuit). Alternatively, the memory 44 and the one or more processors 20 may be separate components that may act in conjunction with one another. In some aspects, the bus 11 may be a communication system that transfers data between multiple components and subcomponents of the UE 115. In some examples, the one or more processors 20 may include any one or combination of modem processor, baseband processor, digital signal processor and/or transmit processor. Additionally or alternatively, the one or more processors 20 may include an uplink adaptation component 130 for carrying out one or more methods or procedures described herein. The uplink adaptation component 130 may comprise hardware, firmware, and/or software and may be configured to execute code or perform instructions stored in a memory (e.g., a computer-readable storage medium).

In some examples, the UE 115 may include the memory 44, such as for storing data used herein and/or local versions of applications or communication with uplink adaptation component 130 and/or one or more of its subcomponents being executed by the one or more processors 20. Memory 44 can include any type of computer-readable medium usable by a computer or processor 20, such as random access memory (RAM), read only memory (ROM), tapes, magnetic discs, optical discs, volatile memory, nonvolatile memory, and any combination thereof. In an aspect, for example, memory 44 may be a computer-readable storage medium (e.g., a non-transitory medium) that stores one or more computer-executable codes defining uplink adaptation component 130 and/or one or more of its subcomponents, and/or data associated therewith, when UE 115 is operating processor 20 to execute uplink adaptation component 130 and/or one or more of its subcomponents. In some examples, the UE 115 may further include a transceiver 60 for transmitting and/or receiving one or more data and control signals to/from the network via network entity 105. The transceiver 60 may comprise hardware, firmware, and/or software and may be configured to execute code or perform instructions stored in a memory (e.g., a computer-readable storage medium). The transceiver 60 may include a first (1^{st}) radio access technology (RAT) radio 160 (e.g. UMTS/WCDMA, LTE-A, WLAN, Bluetooth, WSAN-FA) comprising a modem 165, and a second (2^{nd}) RAT radio 170 (e.g., 5G) comprising a modem 175. The 1^{st} RAT radio 160 and 2^{nd} RAT radio 170 may utilize one or more antennas 64-a and 64-b for transmitting signals to and receiving signals from the network entity 105.

In a blended radio environment such as system 100, different RATs may make use of different channels at different times. Because different RATs are sharing the spectrum and operating partly independently of others, access to one channel may not imply access to another channel. Accordingly, a device capable of transmitting using multiple channels may need to determine whether each channel is available before transmitting. In order to increase bandwidth and throughput, it may be beneficial in some situations to wait for an additional channel to become available rather than transmitting using currently available channel(s).

In some examples, the uplink adaptation component 130 may be configured to adapt uplink transmissions for URLLC during wireless communications. For example, multiple transmissions with adaptive retransmission may be used to ensure high reliable delivery. In another example, progressive transmissions with early terminations may be used. In a further example, a combination of the two examples may be used.

In an aspect, for example, UE 115 may perform a random access procedure to connect with the network entity 105. When UE 115 has connected with network entity 105 and has access to the network, UE 115 may execute uplink adaptation component 130 to transition to the URLLC mode 132. In an instance, UE 115 may transition to the URLLC mode 132 immediately in response to connecting with the network entity 105. In another instance, UE 115 may transition to the URLLC mode 132 at any later time after connecting with the network entity 105. Once in URLLC mode 132, UE 115 may execute uplink adaptation component 130 to adapt uplink transmissions. For example, uplink adaptation component 130 may adapt uplink transmissions using a number of approaches including, but not limited to: adapting multiple transmissions with adaptive retransmissions, determining a dedicated resource assignment for continuous transmissions, and/or using a combination of these two approaches.

In an aspect, uplink adaptation component 130 may adapt uplink transmissions for URLLC during wireless communications. For example, UE 115 may execute transceiver 60 to transmit, while operating in a URLLC mode 132, a first transmission to a network entity in a first frequency region 134. In an example, the first frequency region 132 may correspond to a reserved frequency division multiplexing (FDM) region of an uplink channel. UE 115 may execute transceiver 60 to transmit the first transmission using a number of methods. In one example, UE 115 may first reserve the reserved FDM region of the uplink channel. Then, UE 115 may execute transceiver 60 to transmit a service request in the reserved FDM region of the uplink channel to the network entity 105. In another example, UE 115 may first execute transceiver 60 to receive a physical uplink shared channel (PUSCH) assignment from the network entity 105. The PUSCH assignment includes, at least a demodulation reference signal (DMRS) sequence. Then, UE 115 may execute transceiver 60 to transmit an orthogonal DMRS to the network entity 105 based on the DMRS sequence. In both examples, the first transmission includes a bundle size of 2 to 4 symbols in length.

UE 115 may execute transceiver 60 to receive an grant 136 from the network entity 105 in response to transmitting the first transmission. In an example, the grant 136 indicates at least a second frequency region 138 for uplink transmissions and is different from the first frequency region 134. For example, the grant 136 includes a fixed timing indication that corresponds to a number of symbols to wait before transmitting the one or both of the retransmission or the subsequent transmission. Moreover, the grant 136 may also include adaptive grant information for transmitting the one or both of the retransmission or the subsequent transmission, the adaptive grant information include at least one of a transmit power, starting time position, time duration, and position in the second frequency region 138.

After receiving the grant 136 from the network entity 105, UE 115 may execute uplink adaptation component 130 to adapt the first frequency region 134 to the second frequency region 138 for transmitting one or both of a retransmission or a subsequent transmission based on the grant 136. For example, in order to adapt the first frequency region 134 to the second frequency region 138, UE 115 may execute transceiver 60 to transmit all of the retransmissions and/or subsequent transmissions in the second frequency region 138 instead of the first frequency region 134. In an example, the second frequency region 138 may correspond to either a reserved frequency region or a non-reserved frequency region compared to the first frequency region 134 which corresponds to a reserved frequency region. Additionally, UE 115 may execute transceiver 60 to transmit the one or both of the retransmission or the subsequent transmission in the second frequency region 138 until a control timer expires.

In another aspect, uplink adaptation component 130 may determine a dedicated resource assignment for continuous transmissions. For instance, continuous transmissions may correspond to transmissions that continuously occur until an ACK or some other type of indication to halt transmissions is received. For example, the grant 136 that UE 115 and/or uplink adaptation component 130 receives, may include an indication that the one or both of the retransmission or the subsequent transmission are based on a dedicated resource assignment. UE 115 may execute transceiver 60 to transmit the one or both of the retransmission or the subsequent transmission as a continuous transmission in the second frequency region until an acknowledgement (ACK) signal is received from the network entity indicating a termination of the continuous transmission. In an example, UE 115 may execute transceiver 60 to transmit the one or both of the retransmission or the subsequent transmission irrespective of receiving a retransmission request. Moreover, UE 115 may execute transceiver 60 to increase a transmit power level during the continuous transmission

In a further aspect, uplink adaptation component 130 may use a combination of the approaches including a hybrid approach where the first transmission is a contention based transmission or an adaptive based transmission on HARQ, and the subsequent transmissions are based on circuit switching. For example, UE 115 and/or uplink adaptation component 130 may first transmit a first transmission to a network entity in a first frequency region 134. UE 115 and/or uplink adaptation component 130 may receive an grant 136 from the network entity 105 in response to transmitting the first transmission and adapt the first frequency region to the second frequency region 138. Then UE 115 and/or uplink adaptation component 130 may transmit the one or both of the retransmission or the subsequent transmission as a continuous transmission in the second frequency region until an ACK signal is received from the network entity indicating a termination of the continuous transmission.

In another aspect, uplink adaptation component 130 may use another combination of the approaches including that the first transmission 132 includes a service request and a DMRS sequence, and wherein transmitting the first transmission to the network entity in the first frequency region comprises transmitting the service request and the DMRS sequence on a PUSCH to the network entity in the first frequency region; and transmitting a PUSCH with the DMRS to the network entity in a separate frequency region, the separate frequency region differing from the first frequency region. For example, instead of requiring 1-10⁻⁵ reliability of the service request channel, the system may target lower reliability, e.g. 1-10⁻². Then network entity detection of DMRS and PUSCH may occur to ensure a higher overall reliability, e.g. 1-10⁻⁵.

A UE 115 may also be referred to by those skilled in the art as a mobile station, a subscriber station, a mobile unit, a subscriber unit, a wireless unit, a remote unit, a mobile device, a wireless device, a wireless communications device, a remote device, a mobile subscriber station, an access terminal, a mobile terminal, a wireless terminal, a remote terminal, a handset, a user agent, a mobile client, a client, or some other suitable terminology. A UE 115 may be a cellular phone, a personal digital assistant (PDA), a wireless modem, a wireless communication device, a handheld device, a tablet computer, a laptop computer, a cordless phone, a wearable item such as a watch or glasses, a wireless local loop (WLL) station, or the like. A UE 115 may be able to communicate with macro eNodeBs, small cell eNodeBs, relays, and the like. A UE 115 may also be able to communicate over different access networks, such as cellular or other WWAN access networks, or WLAN access networks.

Additionally, as used herein, the one or more wireless nodes, including, but not limited to, network entity 105 of wireless communication system 100, may include one or more of any type of network component, such as an access point, including a base station or node B, a relay, a peer-to-peer device, an authentication, authorization and accounting (AAA) server, a mobile switching center (MSC), a radio network controller (RNC), etc. In a further aspect, the one or more wireless serving nodes of wireless communication system 100 may include one or more small cell base stations, such as, but not limited to a femtocell, picocell, microcell, or any other base station having a relatively small transmit power or relatively small coverage area as compared to a macro base station.

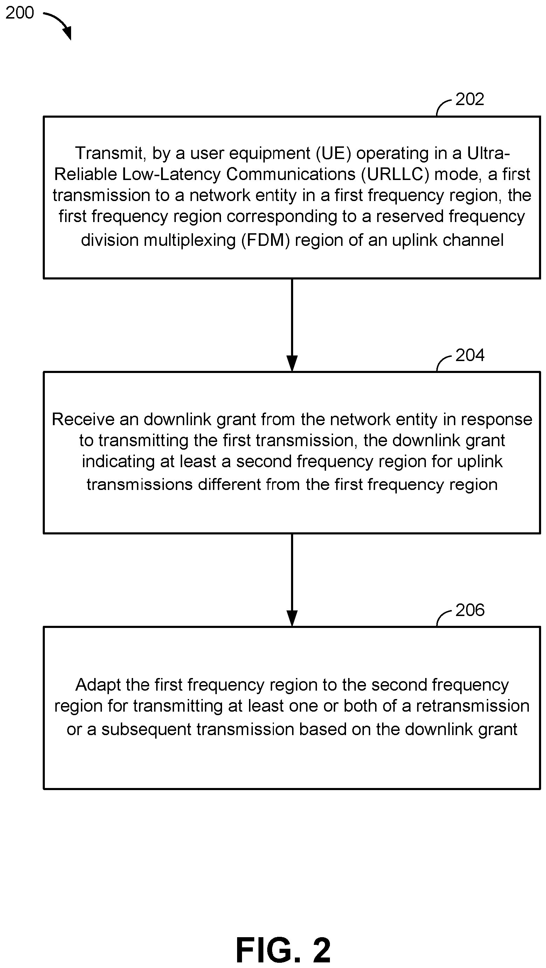

Referring to **FIG. 2****,** an example of one or more operations of an aspect of uplink adaptation component 130 (FIG. 1) according to the present apparatus and methods are described with reference to one or more methods and one or more components that may perform the actions of these methods. Although the operations described below are presented in a particular order and/or as being performed by an example component, it should be understood that the ordering of the actions and the components performing the actions may be varied, depending on the implementation. Also, although the uplink adaptation component 130 is illustrated as having a number of subcomponents, it should be understood that one or more of the illustrated subcomponent may be separate from, but in communication with, the uplink adaptation component 130 and/or each other. Moreover, it should be understood that the following actions or components described with respect to the uplink adaptation component 130 and/or its subcomponents may be performed by a specially-programmed processor, a processor executing specially-programmed software or computer-readable media, or by any other combination of a hardware component and/or a software component specially configured for performing the described actions or components.

In the present invention, at block 202, method 200 includes transmitting, by a UE operating in a URLLC mode, a first transmission to a network entity in a first frequency region, the first frequency region corresponding to a reserved FDM region of an uplink channel. In the present invention, for example, UE 115, executes transceiver 60 and/or uplink adaptation component 130 (FIG. 1) to transmit, while in a URLLC mode, a first transmission to a network entity in a first frequency region, the first frequency region corresponding to a reserved FDM region of an uplink channel.

In the present invention, at block 204, method 200 includes receiving an grant from the network entity in response to transmitting the first transmission, the grant indicating at least a second frequency region for uplink transmissions different from the first frequency region. In the present invention, for example, UE 115, executes transceiver 60 and/or uplink adaptation component 130 (FIG. 1) to receive a grant from the network entity in response to transmitting the first transmission, the grant indicating at least a second frequency region for uplink transmissions different from the first frequency region.

In the present invention, at block 206, method 200 includes adapting the first frequency region to the second frequency region for transmitting one or both of a retransmission or a subsequent transmission based on the grant. In the present invention, for example, UE 115, executes uplink adaptation component 130 (FIG. 1) to adapt the first frequency region to the second frequency region for transmitting one or both of a retransmission or a subsequent transmission based on the grant.

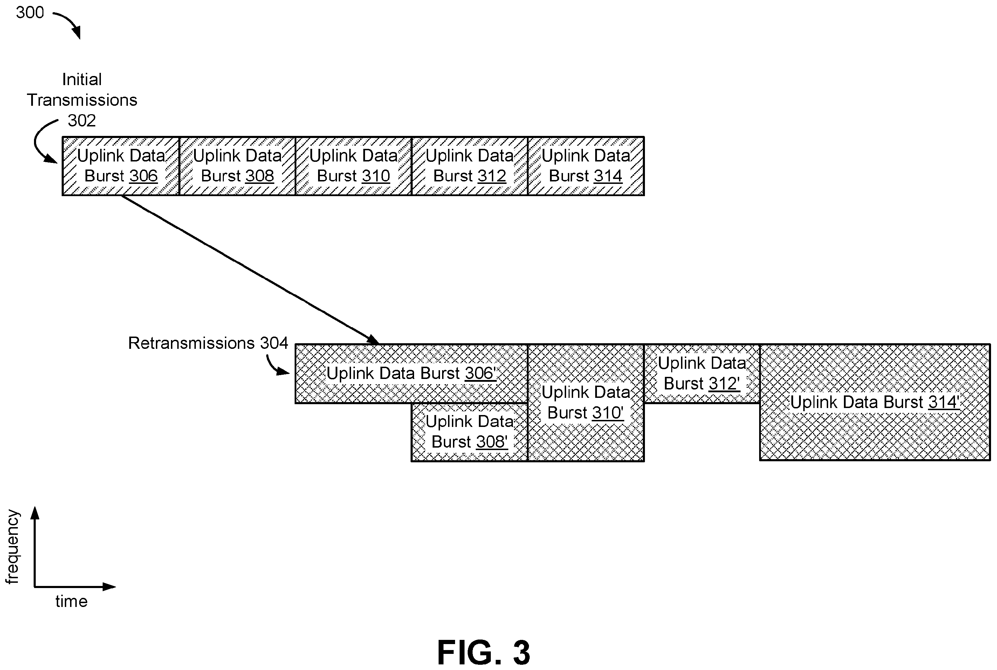

**FIG. 3** is a diagram illustrating an example transmission scheme 300 for initial transmissions 302 and retransmissions 304 on an uplink channel for adapting uplink transmission for URLLC during wireless communications. For example, initial transmissions 302 and retransmissions 304 may be transmitted from a UE, such as UE 115 (FIG. 1) to a network entity, such as network entity 105 (FIG. 1), using uplink adaptation component 130 (FIG. 1).

In an aspect, initial transmissions 302 may include uplink data bursts 306, 308, 310, 312, and 314. Further, UE 115 and/or uplink adaptation component 130 may transmit the initial transmissions 302 in a URLLC mode in a first frequency region of the uplink channel. The initial transmissions 302 correspond to contention based initial transmissions in a reserved frequency band, such as, a reserved FDM region of the uplink channel.

In an aspect, retransmissions 304 may include uplink data bursts 306', 308', 310', 312', and 314'. For example, UE 115 and/or uplink adaptation component 130 may determine that retransmissions of the initial transmissions 302 are needed. Further, UE 115 and/or uplink adaptation component 130 may receive an adjustable grant from the network entity 105 in response to transmitting one or more uplink data bursts of the initial transmissions 302. Based on a determination that retransmissions of the initial transmissions 302 are needed and the reception of the adjustable grant from the network entity 105, UE 115 and/or uplink adaptation component 130 may transmit retransmissions 304 of uplink data bursts in separate frequency regions.

Due to full adaptation based on the received adjustable grant, retransmissions may be transmitted with an adapted load distribution, bandwidth/transmission time interval (TTI) allocation, geometry, payload size, etc. In an example, uplink data burst 306 may be retransmitted as uplink data burst 306' with an extended TTI allocation. In another example, uplink data burst 308' may be transmitted on a different frequency region of the uplink channel. In another example, uplink data burst 310' may be transmitted on an extended frequency region of the uplink channel. In another example, uplink data burst 312' may be transmitted in a similar manner as uplink data burst 312, In another example, uplink data burst 314' may be transmitted with an extended TTI allocation and on an extended frequency region of the uplink channel.

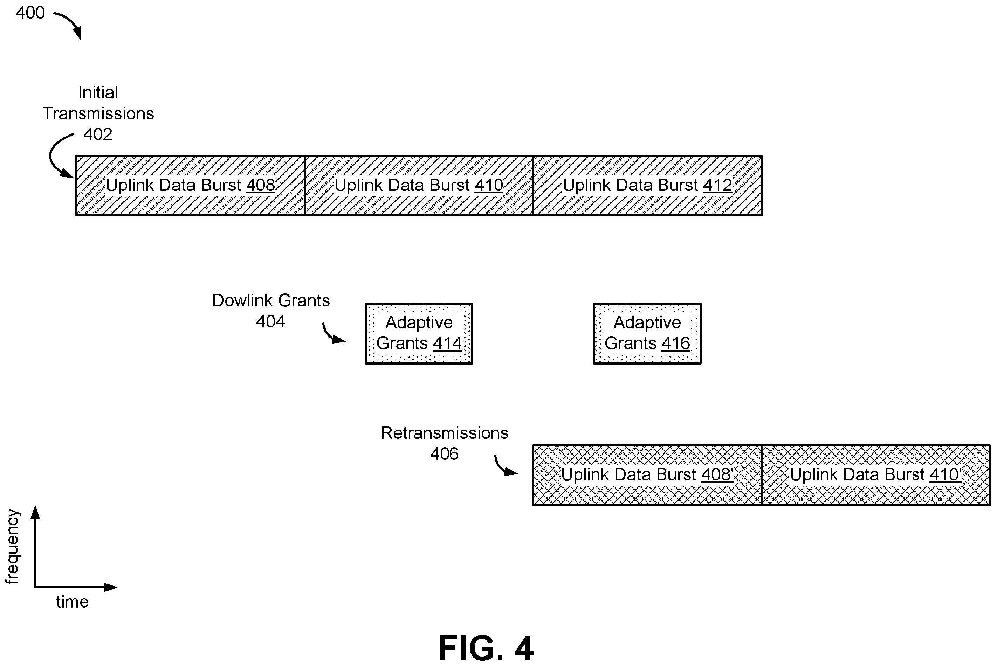

**FIG. 4** is a diagram illustrating an example of a transmission scheme 400 for initial transmissions 402 and retransmissions 406 using a fixed-length TTI on an uplink channel for adapting uplink transmission for URLLC during wireless communications. For example, initial transmissions 402 and retransmissions 406 may be transmitted from a UE, such as UE 115 (FIG. 1) to a network entity, such as network entity 105 (FIG. 1), using uplink adaptation component 130 (FIG. 1).

In an aspect, initial transmissions 402 may include uplink data bursts 408, 410, and 412. Further, UE 115 and/or uplink adaptation component 130 may transmit the initial transmissions 402 in a URLLC mode in a first frequency region of the uplink channel. The initial transmissions 402 correspond to contention based initial transmissions in a reserved frequency band, such as, a reserved FDM region of the uplink channel. Moreover, these initial transmissions 402 may be transmitted using a fixed transmission scheme that employs a fixed-length TTI. For example, the duration of the TTI for each of uplink data bursts 408, 410, and 412 are the same.

In an aspect, grants 404, including adaptive grants 414 and 416, may be transmitted on a downlink channel from network entity 105 to UE 115. For example, the grants 404 may include information corresponding to at least one of the transmit power or an MCS adjustment. Due to the fixed transmission scheme employing a fixed-length TTI, the grants 404 may not be configured to include information corresponding to the TTI duration.

Based on the reception of adaptive grant 414, UE 115 may be configured to transmit uplink data burst 408' with the same TTI duration as uplink data burst 408, and during the same time slot as uplink data burst 412. Similarly, UE 115 may receive adaptive grant 416, and transmit uplink data burst 410' with the same TTI duration as uplink data burst 410'.

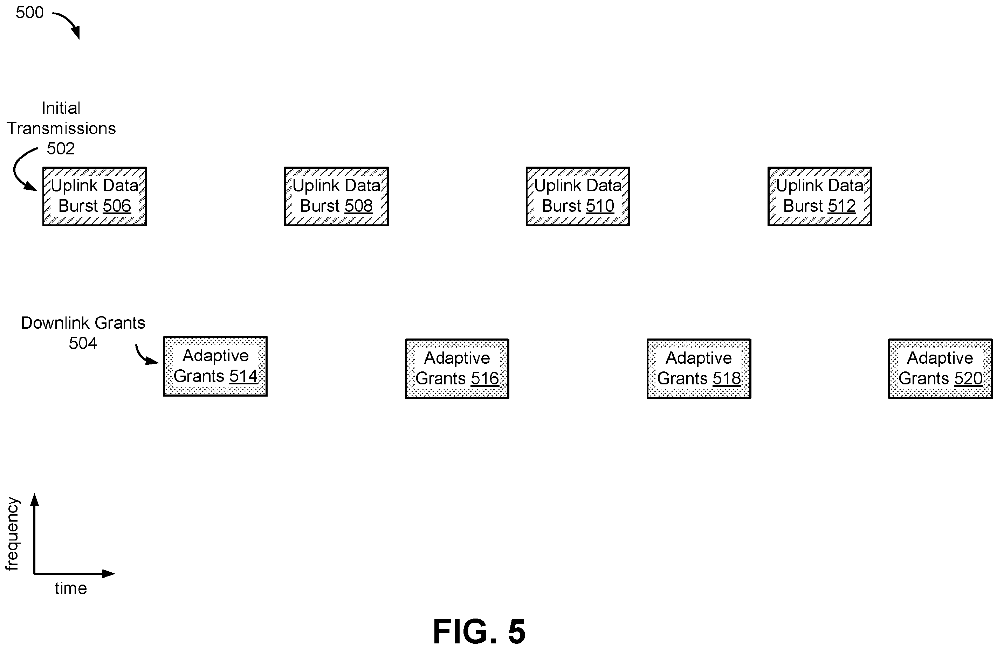

**FIG. 5** is a diagram illustrating an example of a transmission scheme 500 for initial transmissions 502 and grants 504 for adapting uplink transmission for URLLC during wireless communications. For example, initial transmissions 502 may be transmitted from a UE, such as UE 115 (FIG. 1) to a network entity, such as network entity 105 (FIG. 1), using uplink adaptation component 130 (FIG. 1). Further, grants 504 may be transmitted from network entity 105 to UE 115 on a downlink channel.

In an aspect, multiple transmissions may be made within a specified time period (e.g., 1 ms). For example, initial transmissions 502 may be transmitted on the uplink channel with 1 symbol TTI. In this example, UE 115 may be configured to transmit a plurality of uplink data bursts 506, 508, 510, and 512 within a specified time period. This direct adaptive transmissions with 1 symbol TTI requires a substantial amount of overhead.

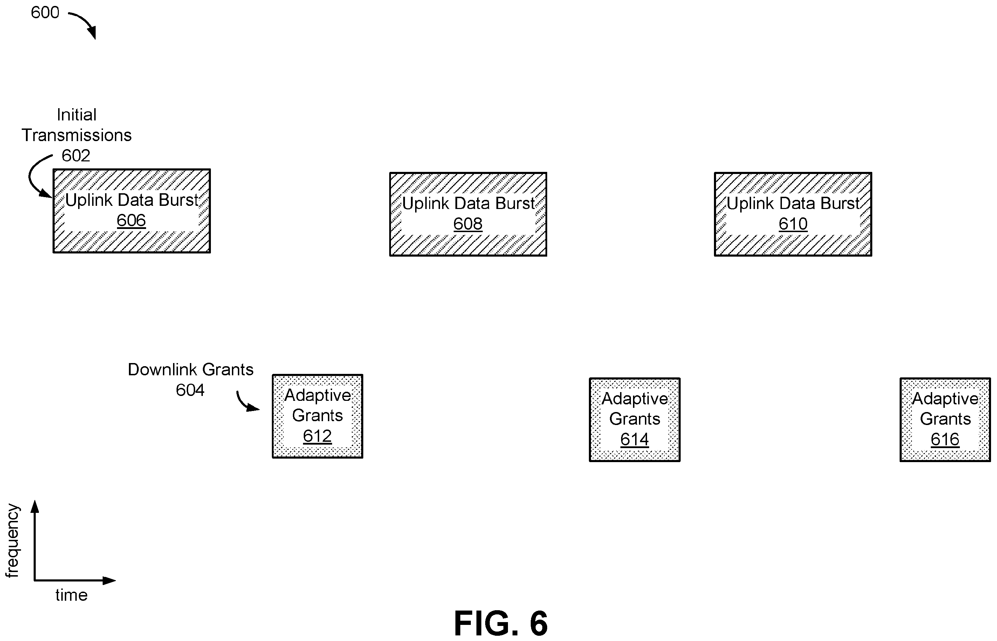

**FIG. 6** is a diagram illustrating an example of a transmission scheme 600 for initial transmissions 602 and grants 604 for adapting uplink transmission for URLLC during wireless communications. For example, initial transmissions 602 may be transmitted from a UE, such as UE 115 (FIG. 1) to a network entity, such as network entity 105 (FIG. 1), using uplink adaptation component 130 (FIG. 1). Further, grants 604 may be transmitted from network entity 105 to UE 115 on a downlink channel.

In an aspect, uplink data bursts may be bundled together for an extended TTI as compared to the uplink data bursts of FIG. 5. For example, if a grant 604, such as adaptive grants 612, 614, and 616, may be received within 1 symbol using power boosting and/or wider frequency assignment, then uplink data bursts 606, 608, and 610 may be bundled. In this example, uplink data bursts 606, 608, and 610 may be transmitted with 2 symbols TTI.

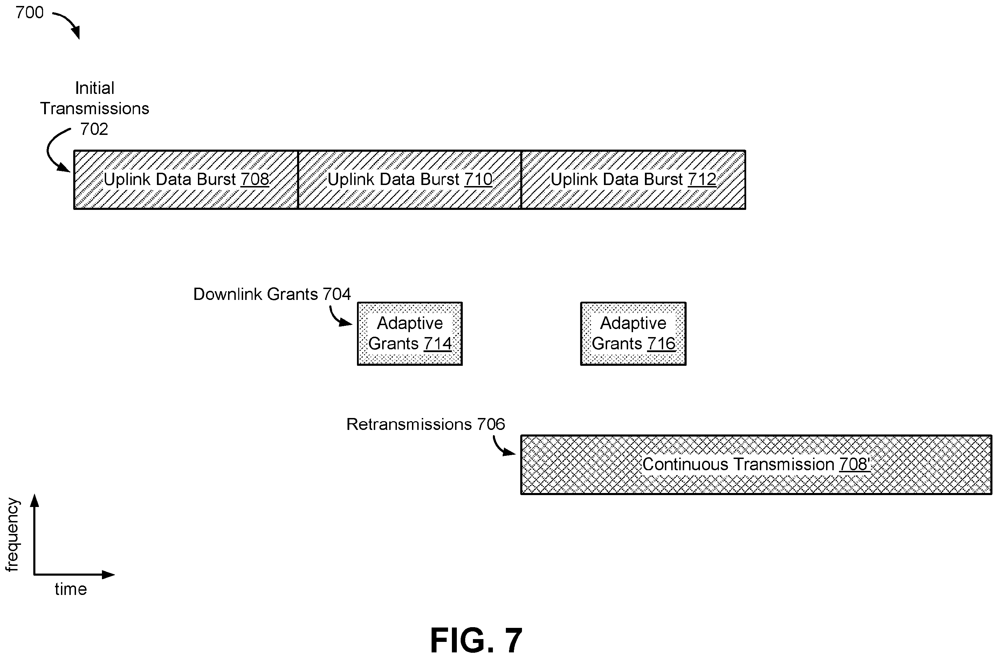

**FIG. 7** is a diagram illustrating an example of a hybrid transmission scheme 700 for initial transmissions 702 and retransmissions 706 for adapting uplink transmission for URLLC during wireless communications. For example, initial transmissions 702 and retransmissions 706 may be transmitted from a UE, such as UE 115 (FIG. 1) to a network entity, such as network entity 105 (FIG. 1), using uplink adaptation component 130 (FIG. 1). Further, grants 704 may be transmitted from network entity 105 to UE 115 on a downlink channel.

In an aspect, the hybrid transmission scheme 700 employs initial transmissions 702 that correspond to contention based initial transmissions in a reserved frequency band, such as, a reserved FDM region of the uplink channel and/or an adaptive based transmission on hybrid automatic repeat request (HARQ). For example, initial transmissions 702 may include uplink data bursts 708, 710, and 712. Further, UE 115 and/or uplink adaptation component 130 may transmit the initial transmissions 702 in a URLLC mode in a first frequency region of the uplink channel.

In an aspect, the hybrid transmission scheme 700 may employ grants 704, including adaptive grants 714 and 716, which include an indication that the at least one or both of the retransmission or the subsequent transmission are based on a dedicated resource assignment. For example, adaptive grants 714 and 716 may indicate at least a second frequency region for uplink transmissions different from the first frequency region in which the initial transmissions 702 were transmitted on.

In an aspect, the hybrid transmission scheme 700 may include retransmissions 706, such as a continuous transmission 708' in the second frequency region until an ACK signal is received from the network entity 105 indicating a termination of the continuous transmission. Further, UE 115 may transmit the continuous transmission 708' irrespective of receiving a retransmission request. Moreover, UE 115 may increase a transmit power level during the continuous transmission 708'.

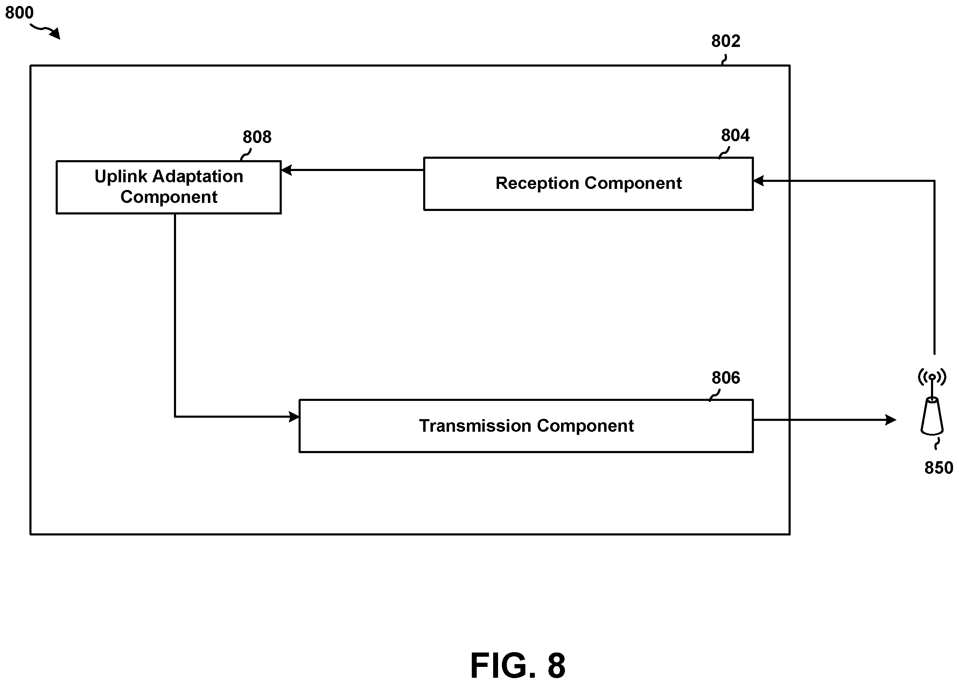

**FIG. 8** is a conceptual data flow diagram 800 illustrating the data flow between different means/components in an exemplary apparatus 802 that includes uplink adaptation component 808, which may be the same as or similar to uplink adaptation component 130 for adapting uplink transmission for URLLC during wireless communications. The apparatus 802 may be a UE, which may include UE 115 of FIG. 1. The apparatus 802 includes a transmission component 806 that transmits, by UE 115 operating in a URLLC mode, a first transmission to a network entity 850 in a first frequency region, the first frequency region corresponding to a reserved FDM region of an uplink channel. The apparatus 802 includes a reception component 804 that receives an adjustable grant from the network entity in response to transmitting the first transmission, the adjustable grant indicating at least a second frequency region for uplink transmissions different from the first frequency region. The apparatus 802 includes an uplink adaptation component 808 that adapts the first frequency region to the second frequency region for transmitting at least one or both of a retransmission or a subsequent transmission based on the adjustable grant.

The apparatus 802 may include additional components that perform each of the blocks of the algorithm in the aforementioned flowchart of FIG. 2. As such, each block in the aforementioned flowchart of FIG. 2 may be performed by a component and the apparatus may include one or more of those components. The components may be one or more hardware components specifically configured to carry out the stated processes/algorithm, implemented by a processor configured to perform the stated processes/algorithm, stored within a computer-readable medium for implementation by a processor, or some combination thereof.

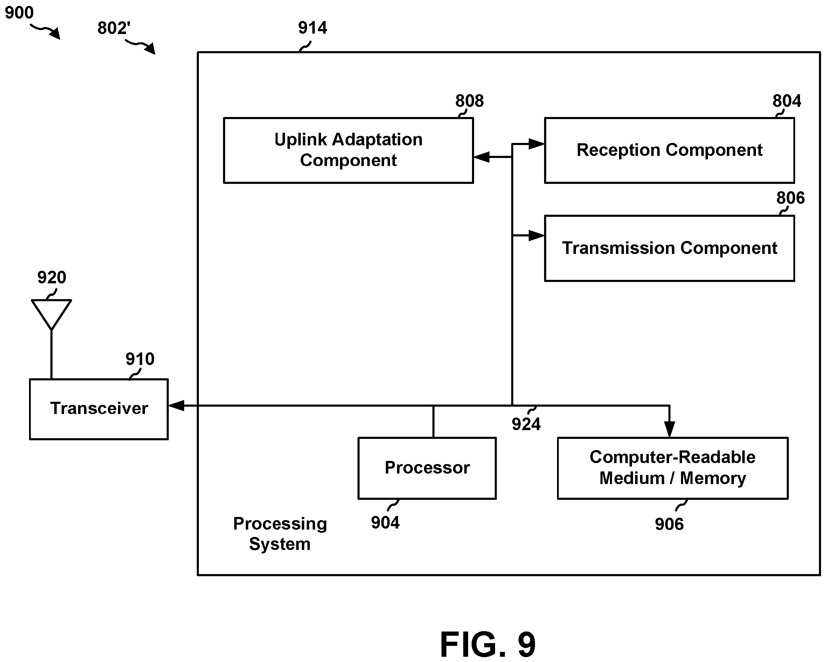

**FIG. 9** is a diagram 900 illustrating an example of a hardware implementation for an apparatus 802' employing a processing system 914 that includes uplink adaptation component 808 (FIG. 9), which may be the same as or similar to uplink adaptation component 130 for adapting uplink transmission for URLLC during wireless communications. The processing system 914 may be implemented with a bus architecture, represented generally by the bus 924. The bus 924 may include any number of interconnecting buses and bridges depending on the specific application of the processing system 914 and the overall design constraints. The bus 924 links together various circuits including one or more processors and/or hardware components, represented by the processor 904, the components 804, 806, 808, and the computer-readable medium / memory 906. The bus 924 may also link various other circuits such as timing sources, peripherals, voltage regulators, and power management circuits, which are well known in the art, and therefore, will not be described any further.

The processing system 914 may be coupled to a transceiver 910. The transceiver 910 is coupled to one or more antennas 920. The transceiver 910 provides a means for communicating with various other apparatus over a transmission medium. The transceiver 910 receives a signal from the one or more antennas 920, extracts information from the received signal, and provides the extracted information to the processing system 914, specifically the reception component 804. In addition, the transceiver 910 receives information from the processing system 914, specifically the transmission component 806, and based on the received information, generates a signal to be applied to the one or more antennas 920. The processing system 914 includes a processor 904 coupled to a computer-readable medium / memory 906. The processor 904 is responsible for general processing, including the execution of software stored on the computer-readable medium / memory 906. The software, when executed by the processor 904, causes the processing system 914 to perform the various functions described *supra* for any particular apparatus. The computer-readable medium / memory 906 may also be used for storing data that is manipulated by the processor 904 when executing software. The processing system 914 further includes at least one of the components 804, 806, and 808. The components may be software components running in the processor 904, resident/stored in the computer readable medium / memory 906, one or more hardware components coupled to the processor 904, or some combination thereof.

In one configuration, the apparatus 802/802' for wireless communication includes means for transmitting, by a UE operating in a URLLC mode, a first transmission to a network entity in a first frequency region, the first frequency region corresponding to a reserved FDM region of an uplink channel, means for receiving an adjustable grant from the network entity in response to transmitting the first transmission, the adjustable grant indicating at least a second frequency region for uplink transmissions different from the first frequency region, and means for adapting the first frequency region to the second frequency region for transmitting at least one or both of a retransmission or a subsequent transmission based on the adjustable grant. The aforementioned means may be one or more of the aforementioned components of the apparatus 802 and/or the processing system 914 of the apparatus 802' configured to perform the functions recited by the aforementioned means.

In some aspects, an apparatus or any component of an apparatus may be configured to (or operable to or adapted to) provide functionality as taught herein. This may be achieved, for example: by manufacturing (e.g., fabricating) the apparatus or component so that it will provide the functionality; by programming the apparatus or component so that it will provide the functionality; or through the use of some other suitable implementation technique. As one example, an integrated circuit may be fabricated to provide the requisite functionality. As another example, an integrated circuit may be fabricated to support the requisite functionality and then configured (e.g., via programming) to provide the requisite functionality. As yet another example, a processor circuit may execute code to provide the requisite functionality.

It should be understood that any reference to an element herein using a designation such as "first," "second," and so forth does not generally limit the quantity or order of those elements. Rather, these designations may be used herein as a convenient method of distinguishing between two or more elements or instances of an element. Thus, a reference to first and second elements does not mean that only two elements may be employed there or that the first element must precede the second element in some manner. Also, unless stated otherwise a set of elements may comprise one or more elements. In addition, terminology of the form "at least one of A, B, or C" or "one or more of A, B, or C" or "at least one of the group consisting of A, B, and C" used in the description or the claims means "A or B or C or any combination of these elements." For example, this terminology may include A, or B, or C, or A and B, or A and C, or A and B and C, or 2A, or 2B, or 2C, and so on.

Those of skill in the art will appreciate that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Further, those of skill in the art will appreciate that the various illustrative logical blocks, modules, circuits, and algorithm steps described in connection with the aspects disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

The methods, sequences and/or algorithms described in connection with the aspects disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor.

Accordingly, an aspect of the disclosure can include a computer readable medium embodying a method for dynamic bandwidth management for transmissions in unlicensed spectrum. Accordingly, the disclosure is not limited to the illustrated examples.

## Claims

1. A method of communication, performed by a user equipment, UE, operating in an Ultra-Reliable Low Latency Communications, URLLC, mode for adjusting how uplink transmissions occur in order to fulfill latency and reliability requirements for URLLC, the method comprising:
transmitting (202) a first transmission to a network entity in a first frequency region, the first frequency region corresponding to a reserved frequency division multiplexing, FDM, region of an uplink channel, wherein the first transmission is a contention based transmission;
receiving (204) a grant from the network entity in response to transmitting the first transmission, the grant indicating at least a second frequency region for uplink transmissions, wherein the second frequency region is different from the first frequency region; and
transmitting an uplink transmission in the second frequency region based on the grant, wherein the uplink transmission comprises at least one or both of a retransmission of the first transmission or a subsequent transmission.

2. The method of claim 1, wherein the grant further includes an indication that the one or both of the retransmission or the subsequent transmission are based on a dedicated resource assignment; and
transmitting the one or both of the retransmission or the subsequent transmission as a continuous transmission in the second frequency region until an acknowledgement, ACK, signal is received from the network entity indicating a termination of the continuous transmission.

3. The method of claim 2, wherein transmitting the one or both of the retransmission or the subsequent transmission as the continuous transmission further comprises transmitting the one or both of the retransmission or the subsequent transmission irrespective of receiving a retransmission request; or
further comprises increasing a transmit power level during the continuous transmission.

4. The method of claim 1, further comprising transmitting the one or both of the retransmission or the subsequent transmission in the second frequency region.

5. The method of claim 4, wherein the second frequency region corresponds to a reserved frequency region or a non-reserved frequency region.

6. The method of claim 5, wherein transmitting the one or both of the retransmission or the subsequent transmission in the second frequency region further comprises transmitting the one or both of the retransmission or the subsequent transmission in the second frequency region until a control timer expires.

7. The method of claim 1, wherein transmitting the first transmission to the network entity using the first frequency region further comprises:
reserving the reserved FDM region of the uplink channel; and
transmitting a service request in the reserved FDM region of the uplink channel to the network entity.

8. The method of claim 1, wherein transmitting the first transmission to the network entity using the first frequency region further comprises:
receiving a physical uplink shared channel, PUSCH, assignment from the network entity, the PUSCH assignment including a demodulation reference signal, DMRS, sequence; and
transmitting an orthogonal DMRS to the network entity based on the DMRS sequence.

9. The method of claim 1, further comprising:
performing a random access procedure to connect with the network entity; and
transitioning to the URLLC mode in response to connecting with the network entity.

10. The method of claim 1, wherein the first transmission includes a bundle size of 2 to 4 symbols in length.

11. The method of claim 1, wherein the grant includes a fixed timing indication that corresponds to a number of symbols to wait before transmitting the one or both of the retransmission or the subsequent transmission.

12. The method of claim 1, wherein the grant includes adaptive grant information for transmitting the one or both of the retransmission or the subsequent transmission, the adaptive grant information include at least one of a transmit power, starting time position, time duration, and position in the second frequency region.

13. The method of claim 1, wherein the first transmission includes a service request and a demodulation reference signal, DMRS, and wherein transmitting the first transmission to the network entity in the first frequency region comprises:
transmitting the service request to the network entity in the first frequency region; and
transmitting a physical uplink shared channel, PUSCH, with the DMRS to the network entity in a separate frequency region, the separate frequency region differing from the first frequency region.

14. An apparatus (115, 802, 802') for wireless communications, comprising means for performing the steps of any of claims 1 to 13.

15. A computer program comprising instructions to perform the steps of any of claims 1 to 13 when executed on a computer.

## Patentansprüche

1. Kommunikationsverfahren, das von einem Benutzergerät, UE, durchgeführt wird, das in einem Ultra-Reliable Low Latency Communications, URLLC, Modus arbeitet, zum Einstellen, wie Uplink-Übertragungen auftreten, um Latenz- und Zuverlässigkeitsanforderungen für URLLC zu erfüllen, wobei das Verfahren umfasst:
Übertragen (202) einer ersten Übertragung an eine Netzwerkeinheit in einem ersten Frequenzbereich, wobei der erste Frequenzbereich einem reservierten Frequenzmultiplex-, FDM, Bereich eines Uplink-Kanals entspricht, wobei die erste Übertragung eine konfliktbasierte Übertragung ist;
Empfangen (204) einer Gewährung von der Netzwerkeinheit als Reaktion auf das Übertragen der ersten Übertragung, wobei die Gewährung mindestens einen zweiten Frequenzbereich für Uplink-Übertragungen angibt, wobei sich der zweite Frequenzbereich von dem ersten Frequenzbereich unterscheidet; und
Übertragen einer Uplink-Übertragung in dem zweiten Frequenzbereich basierend auf der Gewährung, wobei die Uplink-Übertragung mindestens eine oder beide von einer erneuten Übertragung der ersten Übertragung oder einer nachfolgenden Übertragung umfasst.

2. Verfahren nach Anspruch 1, wobei die Gewährung ferner eine Angabe beinhaltet, dass die eine oder beide von der erneuten Übertragung oder der nachfolgenden Übertragung auf einer dedizierten Ressourcenzuweisung basieren; und
Übertragen der einen oder beiden von der erneuten Übertragung oder der nachfolgenden Übertragung als eine kontinuierliche Übertragung in dem zweiten Frequenzbereich, bis ein Bestätigungs-, ACK, Signal von der Netzwerkeinheit empfangen wird, das eine Beendigung der kontinuierlichen Übertragung angibt.

3. Verfahren nach Anspruch 2, wobei das Übertragen der einen oder beiden von der erneuten Übertragung oder der nachfolgenden Übertragung als die kontinuierliche Übertragung ferner das Übertragen der einen oder beiden von der erneuten Übertragung oder der nachfolgenden Übertragung unabhängig vom Empfangen einer erneuten Übertragungsanforderung umfasst; oder
ferner das Erhöhen eines Sendeleistungspegels während der kontinuierlichen Übertragung umfasst.

4. Verfahren nach Anspruch 1, ferner umfassend das Übertragen der einen oder beiden von der erneuten Übertragung oder der nachfolgenden Übertragung in dem zweiten Frequenzbereich.

5. Verfahren nach Anspruch 4, wobei der zweite Frequenzbereich einem reservierten Frequenzbereich oder einem nicht reservierten Frequenzbereich entspricht.

6. Verfahren nach Anspruch 5, wobei das Übertragen der einen oder beiden von der erneuten Übertragung oder der nachfolgenden Übertragung in dem zweiten Frequenzbereich ferner das Übertragen der einen oder beiden von der erneuten Übertragung oder der nachfolgenden Übertragung in dem zweiten Frequenzbereich umfasst, bis ein Steuerzeitgeber abläuft.

7. Verfahren nach Anspruch 1, wobei das Übertragen der ersten Übertragung an die Netzwerkeinheit unter Verwendung des ersten Frequenzbereichs ferner Folgendes umfasst:
Reservieren des reservierten FDM-Bereichs des Uplink-Kanals; und
Übertragen einer Dienstanforderung in dem reservierten FDM-Bereich des Uplink-Kanals an die Netzwerkeinheit.

8. Verfahren nach Anspruch 1, wobei das Übertragen der ersten Übertragung an die Netzwerkeinheit unter Verwendung des ersten Frequenzbereichs ferner Folgendes umfasst:
Empfangen einer Zuweisung eines gemeinsam genutzten physikalischen Uplink-Kanals, PUSCH, von der Netzwerkeinheit, wobei die PUSCH-Zuweisung eine Demodulationsreferenzsignal-, DMRS, Sequenz beinhaltet; und
Übertragen eines orthogonalen DMRS an die Netzwerkeinheit basierend auf der DMRS-Sequenz.

9. Verfahren nach Anspruch 1, ferner umfassend:
Durchführen einer Direktzugriffsprozedur, um sich mit der Netzwerkeinheit zu verbinden; und
Übergehen in den URLLC-Modus als Reaktion auf das Verbinden mit der Netzwerkeinheit.

10. Verfahren nach Anspruch 1, wobei die erste Übertragung eine Bündelgröße mit einer Länge von 2 bis 4 Symbolen beinhaltet.

11. Verfahren nach Anspruch 1, wobei die Gewährung eine feste Zeitangabe beinhaltet, die einer Anzahl von Symbolen entspricht, die zu warten sind, bevor die eine oder beide von der erneuten Übertragung oder der nachfolgenden Übertragung übertragen werden.

12. Verfahren nach Anspruch 1, wobei die Gewährung adaptive Gewährungsinformation zum Übertragen der einen oder beiden von der erneuten Übertragung oder der nachfolgenden Übertragung beinhaltet, wobei die adaptive Gewährungsinformation mindestens eines von einer Sendeleistung, einer Startzeitposition, einer Zeitdauer und einer Position in dem zweiten Frequenzbereich beinhaltet.

13. Verfahren nach Anspruch 1, wobei die erste Übertragung eine Dienstanforderung und ein Demodulationsreferenzsignal, DMRS, beinhaltet und wobei das Übertragen der ersten Übertragung an die Netzwerkeinheit in dem ersten Frequenzbereich Folgendes umfasst:
Übertragen der Dienstanforderung an die Netzwerkeinheit in dem ersten Frequenzbereich; und
Übertragen eines gemeinsam genutzten physikalischen Uplink-Kanals, PUSCH, mit dem DMRS an die Netzwerkeinheit in einem separaten Frequenzbereich, wobei sich der separate Frequenzbereich von dem ersten Frequenzbereich unterscheidet.

14. Vorrichtung (115, 802, 802') für drahtlose Kommunikationen, umfassend Mittel zum Durchführen der Schritte nach einem der Ansprüche 1 bis 13.

15. Computerprogramm, umfassend Anweisungen zum Durchführen der Schritte nach einem der Ansprüche 1 bis 13, wenn es auf einem Computer ausgeführt wird.

## Revendications

1. Un procédé de communication, réalisé par un équipement utilisateur, UE, fonctionnant dans un mode de communications ultra-fiables à faible latence, URLLC, pour ajuster la manière dont des transmissions de liaison montante se produisent afin de répondre à des exigences de latence et de fiabilité pour URLLC, le procédé comprenant :
la transmission (202) d'une première transmission à une entité de réseau dans une première région de fréquence, la première région de fréquence correspondant à une région de multiplexage par répartition en fréquence, FDM, réservée d'un canal de liaison montante, dans lequel la première transmission est une transmission basée sur la contention ;
la réception (204) d'une autorisation à partir de l'entité de réseau en réponse à la transmission de la première transmission, l'autorisation indiquant au moins une seconde région de fréquence pour des transmissions de liaison montante, dans lequel la seconde région de fréquence est différente de la première région de fréquence ; et
la transmission d'une transmission de liaison montante dans la seconde région de fréquence sur la base de l'autorisation, dans lequel la transmission de liaison montante comprend au moins une ou les deux parmi une retransmission de la première transmission ou une transmission ultérieure.

2. Le procédé selon la revendication 1, dans lequel l'autorisation comporte en outre une indication que l'une ou les deux parmi la retransmission ou la transmission ultérieure sont basées sur une attribution de ressource dédiée ; et
la transmission de l'une ou des deux parmi la retransmission ou la transmission ultérieure en tant que transmission continue dans la seconde région de fréquence jusqu'à ce qu'un signal d'accusé de réception, ACK, soit reçu à partir de l'entité réseau, indiquant une terminaison de la transmission continue.

3. Le procédé selon la revendication 2, dans lequel la transmission de l'une ou des deux parmi la retransmission ou la transmission ultérieure en tant que transmission continue comprend en outre la transmission de l'une ou des deux parmi la retransmission ou la transmission ultérieure indépendamment de la réception d'une requête de retransmission ; ou
comprend en outre l'augmentation d'un niveau de puissance d'émission pendant la transmission continue.

4. Le procédé selon la revendication 1, comprenant en outre la transmission de l'une ou des deux parmi la retransmission ou la transmission ultérieure dans la seconde région de fréquence.

5. Le procédé selon la revendication 4, dans lequel la seconde région de fréquence correspond à une région de fréquence réservée ou à une région de fréquence non réservée.

6. Le procédé selon la revendication 5, dans lequel la transmission de l'une ou des deux parmi la retransmission ou la transmission ultérieure dans la seconde région de fréquence comprend en outre la transmission de l'une ou des deux parmi la retransmission ou la transmission ultérieure dans la seconde région de fréquence jusqu'à l'expiration d'une temporisation de contrôle.

7. Le procédé selon la revendication 1, dans lequel la transmission de la première transmission à l'entité de réseau en utilisant la première région de fréquence comprend en outre :
la réservation de la région FDM réservée du canal de liaison montante ; et
la transmission d'une requête de service dans la région FDM réservée du canal de liaison montante à l'entité de réseau.

8. Le procédé selon la revendication 1, dans lequel la transmission de la première transmission à l'entité de réseau en utilisant la première région de fréquence comprend en outre :
la réception d'une attribution de canal physique partagé de liaison montante, PUSCH, de l'entité de réseau, l'attribution PUSCH incluant une séquence de signal de référence de démodulation, DMRS ; et
la transmission d'un DMRS orthogonal à l'entité de réseau sur la base de la séquence DMRS.

9. Le procédé selon la revendication 1, comprenant en outre :
la réalisation d'une procédure d'accès aléatoire pour se connecter à l'entité de réseau ; et
le passage au mode URLLC en réponse à la connexion avec l'entité de réseau.

10. Le procédé selon la revendication 1, dans lequel la première transmission comporte une taille de paquet de longueur de 2 à 4 symboles.

11. Le procédé selon la revendication 1, dans lequel l'autorisation inclut une indication de séquencement fixe qui correspond à un nombre de symboles à attendre avant la transmission de l'une ou les deux parmi la retransmission ou la transmission ultérieure.

12. Le procédé selon la revendication 1, dans lequel l'autorisation inclut une information d'autorisation adaptative pour la transmission de l'une ou les deux parmi la retransmission ou la transmission ultérieure, l'information d'autorisation adaptative inclut au moins une parmi une puissance d'émission, une position de temps de départ, une durée et une position dans la seconde région de fréquence.

13. Le procédé selon la revendication 1, dans lequel la première transmission comporte une requête de service et un signal de référence de démodulation, DMRS, et dans lequel la transmission de la première transmission à l'entité de réseau dans la première région de fréquence comprend :
la transmission de la requête de service à l'entité de réseau dans la première région de fréquence ; et
la transmission d'un canal physique partagé de liaison montante, PUSCH, avec le DMRS à l'entité de réseau dans une région de fréquence distincte, la région de fréquence distincte différant de la première région de fréquence.

14. Un appareil (115, 802, 802') pour la communication sans fil, comprenant des moyens pour réaliser les étapes de l'une des revendications 1 à 13.

15. Un programme de calculateur comprenant des instructions pour réaliser les étapes de l'une des revendications 1 à 13, lorsqu'elles sont exécutées sur un calculateur.
